# EUROPÄISCHE PATENTSCHRIFT

(11) **EP 1 397 643 B1**
(45) Veröffentlichungstag und Bekanntmachung des Hinweises auf die Patenterteilung: **14.10.2009**
(21) Anmeldenummer: 02748576.2
(22) Anmeldetag: 10.06.2002
(51) Int. Cl.: G01C 21/34, G08G 1/0968

(54) **VERFAHREN ZUM ERZEUGEN VON NAVIGATIONSDATEN FÜR EINE ROUTENFÜHRUNG SOWIE NAVIGATIONSSYSTEM**
METHOD FOR GENERATING NAVIGATING DATA FOR ROUTE GUIDANCE AND NAVIGATION SYSTEM
PROCEDE DE PRODUCTION DE DONNEES DE NAVIGATION POUR UNE PREVISION D'ITINERAIRE ET SYSTEME DE NAVIGATION

(30) Priorität: 13.06.2001 DE 10128517
(43) Veröffentlichungstag der Anmeldung: 17.03.2004
(73) Patentinhaber: Vodafone Holding GmbH, 40213 Düsseldorf (DE)
(72) Erfinder: ALGER, Michael, 85540 Haar (DE)
(74) Vertreter: Müller, Thomas
(86) Internationale Anmeldenummer: PCT/DE2002/002108
(87) Internationale Veröffentlichungsnummer: WO 2002/101331

(56) Entgegenhaltungen:
- EP-A- 0 978 706
- DE-A- 19 858 477
- DE-A- 19 928 295
- US-A- 5 938 720
- US-B1- 6 230 099

## Beschreibung

Die vorliegende Erfindung betrifft zunächst ein Verfahren zum Erzeugen von Navigationsdaten für eine Routenführung mittels eines Navigationssystems gemäß dem Oberbegriff von Patentanspruch 1 sowie dem Oberbegriff von Patentanspruch 3. Weiterhin betrifft die Erfindung ein Computerprogrammprodukt sowie ein Navigationssystem für eine Routenführung gemäß dem Oberbegriff von Patentanspruch 21.

Mit zunehmendem Verkehr auf den Straßen wird es immer wichtiger, ausgeklügelte Navigationssysteme sowie Verfahren zum Erzeugen von Navigationsdaten bereitzustellen, mittels derer Verkehrsteilnehmer möglichst schnell und möglichst von Staus unbehelligt von einem Startort zu einem Zielort gelangen können.

Navigationssysteme für Fahrzeuge sind bereits seit längerem bekannt und funktionieren beispielsweise bisher derart, daß sie an Hand einer Positionsbestimmung des Kraftfahrzeugs und der Zieleingabe des Nutzers aus dem Straßennetz die beste Wegführung auswählen. Solche Navigationssysteme können bestehende Verkehrsstaus auf Autobahnen, wie sie von unterschiedlichen Diensten verbreitet werden, in die Wegführung einbeziehen, um Umleitungen zu empfehlen.

Dabei wird beispielsweise im Navigationssystem eine Route aus wenigstens einer Routenmöglichkeit ermittelt. Dies geschieht derart, daß zunächst jede Routenmöglichkeit in eine Anzahl von Routensegmenten unterteilt wird. Die Erzeugung der Navigationsdaten für die Routenführung erfolgt dann auf eine Weise, daß jedem Routensegment ein Segmentwiderstand zugeordnet wird, die einzelnen Segmentwiderstände anschließend verknüpft werden und auf Grund der verknüpften Segmentwiderstände die geeignete Route festgelegt wird. Eine derartige Lösung ist beispielsweise in der US 5,938,720 B offenbart.

Die Auswahl der besten Route (Strecke) erfolgt folglich durch Gewichtung aller möglichen Routensegmente (Streckenabschnitte). Jedes Routensegment besitzt eine bestimmte Länge (beispielsweise in Kilometer) und einen bestimmten Segmentwiderstand. Dieser Segmentwiderstand kann anschaulich beispielsweise vergleichbar mit der notwendigen Reisezeit für dieses Routensegment oder der inversen erwarteten Durchschnittsgeschwindigkeit sein. So kann beispielsweise die Wahl zwischen "20 Kilometer Autobahn in zehn Minuten" und "fünf Kilometer Landstraße in fünf Minuten plus zwei Kilometer Ortsdurchfahrt in zehn Minuten" zu Gunsten der kürzeren Reisezeit auf der längeren Autobahnstrecke entschieden werden.

Die Reisezeiten, beziehungsweise Segmentwiderstände, der verschiedenen Straßentypen sind auf den entsprechenden Landkarten-CD-ROMs der Navigationssysteme mitcodiert und nur sehr pauschal eingeteilt. Jede Autobahn erhält eine Durchschnittsgeschwindigkeit von beispielsweise 120 km/h, und alle Autobahnabschnitte sind (pro Länge) gleich gewichtet. Gleiches gilt für Landstraßen und Stadtgebiete. Somit erfolgt beispielsweise die Wahl der Autobahn (nachfolgend mit "A" bezeichnet) von München nach Düsseldorf nur an Hand der Streckenlänge, beispielsweise über Nürnberg.

Bei diesem Beispiel ist nun aber die A3 von Nürnberg nach Frankfurt zweispurig und erfahrungsgemäß voller als die A5 von Karlsruhe nach Frankfurt. Sie sollte daher eine andere Durchschnittsgeschwindigkeit erlauben, so daß eigentlich eine Streckenführung über Karlsruhe vorzuziehen wäre. Obendrein ist auf der A3 das Risiko, einen Stau anzutreffen, auf Grund der höheren Verkehrsdichte größer als auf der A5. Dieses Risiko ist auch vom Wochentag, von der Uhrzeit, von der Fahrtrichtung und von Ereignissen wie Ferienbeginn in einzelnen Bundesländern oder dergleichen abhängig. Die reale, erzielbare Reisegeschwindigkeit ist also dynamisch, das heißt orts- und zeitabhängig. Sie ist weiterhin abhängig von statistisch erfaßbaren Ereignissen, von aktuellen, nicht vorhersehbaren Ereignissen, von statistisch regelmäßigen Ereignissen wie Baustellen und dergleichen.

In der DE 198 58 477 A1 ist eine Lösung offenbart, bei der zum automatischen Ermitteln von Verkehrsinformationen mittels einer datenverarbeitenden Anlage ein Verkehrswegenetz auf ein rekurrentes neuronales Netz abgebildet wird. Das neuronale Netz wird in Form eines Simulations-Netzwerks in der datenverarbeitenden Anplage implementiert.

Bekannte Navigationssysteme berücksichtigen jedoch nur die aktuellen Verkehrsstörungen, nicht aber statistisch zu erwartende Reisezeiten. Dies führt dazu, daß zum Beispiel die Wahl der Strecke von München nach Düsseldorf, die zu Beginn der Fahrt mittels des Navigationssystems vorgenommen wird, an Hand eines Staus entschieden wird, der erst in Stunden erreicht wird und bis dahin vielleicht schon verschwunden ist. Navigationssysteme der bekannten Art erfassen keine Vorhersagen.

Ausgehend vom genannten Stand der Technik liegt der Erfindung die Aufgabe zu Grunde, ein Verfahren sowie ein Navigationssystem der eingangs genannten Art derart weiterzubilden, daß die im Zusammenhang mit dem Stand der Technik beschriebenen Nachteile vermieden werden können. Insbesondere soll ein Verfahren und ein System bereitgestellt werden, mit dem eine Dynamisierung der Navigation möglich wird.

Diese Aufgabe wird gelöst durch die Merkmale des Verfahrens gemäß Patentanspruch 1, des Verfahrens gemäß Patentanspruch 3, des Computerprogrammprodukts gemäß Patentanspruch 20 sowie des Navigationssystems gemäß Patentanspruch 21. Weitere Vorteile, Merkmale, Details, Aspekte und Effekte der Erfindung ergeben sich aus den Unteransprüchen, der Beschreibung sowie den Zeichnungen. Merkmale und Details, die im Zusammenhang mit den erfindungsgemäßen Verfahren beschreiben sind, gelten dabei selbstverständlich auch für das erfindungsgemäße Navigationssystem, und umgekehrt. Analoges gilt für das erfindungsgemäße Computerprogrammprodukt.

Der Erfindung liegt die Erkenntnis zu Grunde, daß die Segmentwiderstände der einzelnen Routensegmente nicht mehr pauschal ermittelt werden, sondern daß für jedes Routensegment aus einer Anzahl von für dieses Routensegment charakteristischen Informationen (Klassendaten) jeweils ein individueller Segmentwiderstand ermittelt wird.

Gemäß dem ersten Aspekt der Erfindung wird ein Verfahren zum Erzeugen von Navigationsdaten für eine Routenführung mittels eines Navigationssystems bereitgestellt, bei dem mittels der Navigationsdaten im Navigationssystem eine Route aus wenigstens einer Routenmöglichkeit ermittelt wird, wobei jede Routenmöglichkeit in eine Anzahl von Routensegmenten unterteilt wird und bei dem im Navigationssystem die Navigationsdaten für die Routenführung erzeugt werden, indem jedem Routensegment ein Segmentwiderstand zugeordnet wird und indem die einzelnen Segmentwiderstände verknüpft werden und auf Grund der verknüpften Segmentwiderstände die geeignete Route festgelegt wird. Das Verfahren ist erfindungsgemäß **dadurch gekennzeichnet, daß** der Segmentwiderstand eines jeden Routensegments im Navigationssystem dynamisch erzeugt wird, wobei sich der Segmentwiderstand über die Zeit verändern kann, indem jedem Routensegment eine Klasse von für das Routensegment charakteristischen Daten zugeordnet wird und indem zumindest aus einem Bestandteil der charakteristischen Klassendaten ein individueller Segmentwiderstand für das Routensegment ermittelt wird.

Durch das erfindungsgemäße Verfahren wird nunmehr eine dynamische Navigation möglich. Dabei wird das erfindungsgemäße Verfahren vorteilhaft mittels beziehungsweise in einem Navigationssystem durchgeführt. Beispiele für vorteilhafte Navigationssysteme werden im weiteren Verlauf der Beschreibung näher erläutert.

Im Unterschied zu den bisher bekannten Verfahren, bei denen jedem Routensegment ein statischer, nicht veränderlicher Segmentwiderstand zugeordnet wurde, wird der Segmentwiderstand eines jeden Routensegments im Navigationssystem nunmehr dynamisch erzeugt. Das bedeutet, daß sich der Segmentwiderstand über die Zeit verändern kann. Dieser sich veränderbare Segmentwiderstand wird mit Hilfe von charakteristischen Klassendaten ermittelt.

Wenn ein Nutzer des Navigationssystems von einem Startort zu einem Zielort reisen will, gibt dieser die Koordinaten für den Startort und den Zielort üblicherweise zunächst in das Navigationssystem ein. In der Regel stehen mehrere Routenmöglichkeiten zur Verfügung, wie der Nutzer des Navigationssystems vom Startort zum Zielort gelangen kann. Im Navigationssystem wird also eine Route aus wenigstens einer Routenmöglichkeit ermittelt. Dazu wird jede Routenmöglichkeit zunächst in eine Anzahl von Routensegmenten unterteilt. Jedem der Routensegmente wird ein bestimmter Segmentwiderstand zugeordnet. Dieser Segmentwiderstand ist im Vergleich zum Stand der Technik jedoch nicht mehr statisch, das heißt unveränderlich, sondern er wird im Navigationssystem für jedes Routensegment individuell - und insbesondere auch zeitlich variabel - bestimmt. Dies geschieht derart, daß der jeweilige individuelle Segmentwiderstand für ein Routensegment aus zumindest einem Bestandteil der charakteristischen Klassendaten für dieses Routensegment ermittelt wird.

Ein wesentlicher Gesichtspunkt der vorliegenden Erfindung ist also, daß für jedes Routensegment eine Klasse von für das Routensegment charakteristischen Daten zur Verfügung steht, aus denen ein individueller Segmentwiderstand für das Routensegment ermittelt werden kann. Dabei kann sich der Wert des Segmentwiderstands über die Zeit verändern.

Die auf diese Weise ermittelten einzelnen individuellen Segmentwiderstände für jedes Routensegment werden anschließend verknüpft. Auf Grund der verknüpften Segmentwiderstände wird aus den verschiedenen Routenmöglichkeiten schließlich eine geeignete Route festgelegt.

Vorteilhaft erfolgt die Festlegung der Route, die Aufteilung der Routenmöglichkeiten in einzelne Routensegmente sowie die Ermittlung des individuellen Segmentwiderstands aus charakteristischen Klassendaten im Navigationssystem automatisch.

Mit dem erfindungsgemäßen Verfahren wird es nunmehr möglich, den Segmentwiderstand eines jeden Routensegments auf der Basis unterschiedlichster Klassendaten für dieses Routensegment zu ermitteln. Dabei ist die Erfindung nicht auf bestimmte charakteristische Klassendaten für die Routensegmente beschränkt. Wichtig ist lediglich, daß die ausgewählten Daten für ein jeweiliges Routensegment charakteristisch sind. Einige nicht ausschließliche Beispiele für geeignete charakteristische Klassendaten werden im weiteren Verlauf der Beschreibung näher erläutert.

Die Erfindung ist nicht auf bestimmte Navigationsarten beziehungsweise Navigationssysteme beschränkt. Vorteilhaft kann das erfindungsgemäße Verfahren zum dynamischen Erzeugen von Navigationsdaten für eine Routenführung zu Lande, insbesondere im Straßenverkehr eingesetzt werden. Jedoch ist die Erfindung nicht auf diese spezielle Einsatzmöglichkeit beschränkt. Ebenso ist es beispielsweise denkbar, daß das erfindungsgemäße Verfahren (und auch das im weiteren Verlauf der Beschreibung erläuterte erfindungsgemäße Navigationssystem) zur Navigation auf See, zur Navigation in der Luft und dergleichen eingesetzt wird. Bei einer Seenavigation können die charakteristischen Klassendaten beispielsweise Gezeiteninformationen, Strömungsinformationen, Wetterdaten und dergleichen umfassen, so daß diese Informationen bei der Festlegung einer geeigneten Route (eines geeigneten Kurses) berücksichtigt werden können.

Nachfolgend wird die Erfindung zum besseren Verständnis an Hand einer Navigation im Straßenverkehr erläutert, wobei hier mittels des erfindungsgemäßen Verfahrens insbesondere eine Navigation mit verkehrsabhängigen Segmentwiderständen möglich wird.

Die Festlegung der Route, die Erzeugung der individuellen Segmentwiderstände sowie die Ermittlung und Verarbeitung charakteristischer Klassendaten kann im Navigationssystem durch geeignete Mittel erfolgen. Bei diesen Mitteln kann es sich beispielsweise um wenigstens eine Rechnereinheit, um Bestandteile einer Rechnereinheit, um elektronische Bauteile, Komponenten, Schaltungen, Schaltungsteile, um geeignete Programmittel und dergleichen handeln. Bei den Programmitteln kann es sich beispielsweise um geeignete Computerprogrammprodukte, Computerprogramme, beziehungsweise Software, und dergleichen handeln.

Eine auf die vorstehende Art und Weise festgelegte Route kann nachfolgend auch noch modifiziert werden. Dabei wird die zunächst festgelegte Route wiederum in eine Anzahl von Routensegmenten unterteilt. Für jedes Routensegment der Route wird zumindest aus einem Bestandteil der charakteristischen Klassendaten ein individueller Segmentwiderstand ermittelt. Die einzelnen Segmentwiderstände werden verknüpft und auf Grund der verknüpften Segmentwiderstände wird die Route modifiziert.

Eine solche Routenmodifikation ist beispielsweise dann sinnvoll, wenn in einem oder mehreren Routensegment(en) drastische Veränderungen auftreten. Vorzugsweise wird der Segmentwiderstand für jedes Routensegment in zeitlichen Abständen, vorzugsweise in sehr kurzen zeitlichen Abständen (etwa im Millisekundenbereich), immer wieder neu ermittelt. Ändert sich beispielsweise der Widerstand eines Segments, kann im Navigationssystem - vorzugsweise automatisch - entschieden werden, ob eine Modifikation der Route vorgenommen wird und wenn ja, in welcher Form. Auf diese Weise ist das Verfahren in der Lage, nach einer einmal festgelegten Routenführung diese Route auf Grund unvorhergesehen eingetretener Umstände modifizieren zu können. Wenn beispielsweise in einem Routensegment der festgelegten Route ein Unfall auftritt, werden diese Unfalldaten als charakteristische Klassendaten für dieses Routensegment festgelegt. Bei der nächsten Ermittlung des individuellen Segmentwiderstands greift dann das Navigationssystem auf diese charakteristischen Klassendaten zurück, so daß ein von dem vorherigen individuellen Segmentwiderstand abweichender neuer Segmentwiderstand bestimmt wird. Auf Grund der Höhe des ermittelten Segmentwiderstands kann dann im Navigationssystem bestimmt werden, ob eine, und wenn ja welche, neue Routenführung vorgeschlagen wird.

Gemäß einem zweiten Aspekt der Erfindung wird ein Verfahren zum Modifizieren von Navigationsdaten für eine Routenführung mittels eines Navigationssystems bereitgestellt, bei dem mittels der Navigationsdaten im Navigationssystem eine zunächst festgelegte Route modifiziert wird, wobei die Route in eine Anzahl von Routensegmenten unterteilt wird und bei dem im Navigationssystem die Navigationsdaten für jedes Routensegment erzeugt werden, indem jedem Routensegment ein Segmentwiderstand zugeordnet wird und indem die einzelnen Segmentwiderstände verknüpft werden und auf Grund der verknüpften Segmentwiderstände die Route modifiziert wird. Dieses Verfahren ist erfindungsgemäß **dadurch gekennzeichnet, daß** der Segmentwiderstand eines jeden Routensegments im Navigationssystem dynamisch erzeugt wird, wobei sich der Segmentwiderstand über die Zeit verändern kann, indem jedem Routensegment eine Klasse von für das Routensegment charakteristischen Daten zugeordnet wird und indem zumindest aus einem Bestandteil der charakteristischen Klassendaten ein individueller Segmentwiderstand für das Routensegment ermittelt wird.

Die Funktionsweise dieses Verfahrens entspricht in etwa derjenigen des zuvor beschriebenen Verfahrens zum Festlegen einer Route, so daß diesbezüglich auf die vorstehend gemachten Ausführungen vollinhaltlich Bezug genommen und hiermit verwiesen wird.

Wie weiter oben bereits dargelegt wurde, werden die Segmentwiderstände in Form individueller Segmentwiderstände nunmehr auf Grund von Klassendaten ermittelt, wobei jede Klasse für ein Routensegment charakteristische Daten aufweist. Einige nicht ausschließliche Beispiele geeigneter charakteristischer Daten für die Routensegmente werden nachfolgend näher erläutert. Dabei können diese charakteristischen Daten jeweils einzeln oder aber in jeder beliebigen Kombination die für das Routensegment charakteristischen Klassendaten bilden. Selbstverständlich sind auch noch andere Arten von charakteristischen Daten möglich, so daß die Erfindung nicht auf die beschriebenen Beispiele beschränkt ist.

Vorteilhaft kann der individuelle Segmentwiderstand für das Routensegment aus charakteristischen Klassendaten ermittelt werden, die in bezug auf das Routensegment aktuelle Werte umfassen. Auf diese Weise können aktuell in den einzelnen Routensegmenten herrschende Situationen in die Berechnung des individuellen Segmentwiderstands miteinbezogen werden. Dies soll an Hand eines nicht ausschließlichen Beispiels erläutert werden. Beispielsweise ist es möglich, daß die charakteristischen Daten mit Hilfe eines Mobilfunknetzes ermittelt werden. Dies wird im weiteren Verlauf der Beschreibung noch näher erläutert. Wenn ein solches Mobilfunknetz zur Bestimmung charakteristischer Daten eingesetzt wird, können beispielsweise Positionsinformationen aktiver Teilnehmer des Mobilfunknetzes, die sich in einem bestimmten Routensegment befinden, beispielsweise durch Auslesen der bei normalen mobilen Telefongesprächen anfallenden Daten gesammelt werden. Vorteilhaft werden die Daten im Festnetzteil des Mobilfunknetzes, nicht aus den Mobiltelefonen gesammelt. Bei einem GSM-Netz können diese Informationen beispielsweise aus den BSC (Base Station Controller) ausgelesen werden. Bei den künftig existierenden UMTS-Netzen können die Positionsinformationen etwa aus entsprechenden Netzknoten ausgelesen werden. Die einzelnen Positionsinformationen liefern Bewegungsvektoren, da die einzelnen Werte für jeden aktiven Teilnehmer regelmäßig (etwa alle 480 msec) erneuert werden. Diese Bewegungsvektoren werden dann auf einer Landkarte abgebildet (gematcht), wodurch die Verkehrssituation (nicht nur die Verkehrsstaus, sondern die gesamte Verkehrsdichte) für jedes Routensegment ermittelt werden kann.

In weiterer Ausgestaltung kann der individuelle Segmentwiderstand für das Routensegment aus charakteristischen Klassendaten ermittelt werden, die in bezug auf das Routensegment Prognosewerte umfassen. Dies kann beispielsweise derart erfolgen, daß über einen bestimmten, vorzugsweise längeren Zeitraum, Werte über die herrschende Verkehrsdichte in einem Routensegment ermittelt und anschließend mit dem Kalender, einer bestimmten Uhrzeit oder dergleichen verknüpft werden. Diese charakteristischen Daten werden dann in der für das Routensegment charakteristischen Datenklasse abgespeichert. Auf Grund dieser historisch ermittelten Informationen lassen sich dann Prognosen für die Zukunft erstellen, da für jedes Routensegment für jede Zeit eine zu erwartende Reisezeit zur Verfügung steht. Besonderheiten wie Ferienbeginn, Feiertage und dergleichen können ebenfalls berücksichtigt werden. Über solche Prognosewerte lassen sich vorteilhaft immer wiederkehrende Ereignisse, wie beispielsweise Berufsverkehr mit erhöhter Verkehrsdichte und dergleichen in die Festlegung und/oder Modifikation der Route mit einbeziehen.

Wenn nun ein Nutzer des Navigationssystems eine Route von seinem Startort zu einem Zielort festlegen möchte, kann das Navigationssystem nach Aufteilung der einzelnen Routenmöglichkeiten in die verschiedenen Routensegmente jedem Routensegment auch in die Zukunft gerichtete zeitliche Prognosewerte zuordnen. So ist es beispielsweise möglich, daß schon beim Festlegen der Route Prognosewerte über die zu erwartende Verkehrsdichte in Routensegmenten bereitstehen, die erst zu einem späteren Zeitpunkt erreicht werden. So ist es beispielsweise durch Verwendung derartiger Prognosewerte möglich, bereits frühzeitig Verkehrsspitzen in einzelnen Routensegmenten, die beispielsweise durch Berufsverkehr und dergleichen hervorgehoben werden, frühzeitig in die Routenplanung miteinzubeziehen.

Ebenso können auch langfristige Trends berücksichtigt werden. So ist die zu erwartende Verkehrsdichte an einem vergleichbaren Ferienanfangsfreitag im Jahr 2002 vermutlich eine andere, als dies im Jahr 1996 oder 2000 war.

Vorteilhaft kann der individuelle Segmentwiderstand für das Routensegment auch aus charakteristischen Klassendaten ermittelt werden, die in bezug auf das Routensegment Attributwerte umfassen. Bei Attributwerten handelt es sich generell um nicht veränderbare, statische Werte. Im Zusammenhang mit dem Straßenverkehr kann es sich hierbei beispielsweise um generelle Geschwindigkeitsbegrenzungen auf Straßen, die Anzahl von Spuren pro Fahrzeugbahn, das Vorhandensein größerer Städte im Bereich des Routensegments und dergleichen handeln.

Vorteilhaft kann der individuelle Segmentwiderstand für das Routensegment aus charakteristischen Klassendaten ermittelt werden, die in bezug auf das Routensegment zeitabhängige und/oder zeitlich variable und/oder ortsabhängige und/oder örtlich variable Werte umfassen. Die Ermittlung der individuellen Segmentwiderstände pro Routensegment kann somit orts- und zeitabhängig, das heißt dynamisch, erfolgen.

In weiterer Ausgestaltung kann der individuelle Segmentwiderstand für das Routensegment aus charakteristischen Klassendaten ermittelt werden, die in bezug auf das Routensegment statistisch erfaßbare und/oder zu erwartende Werte umfassen. Hierbei kann es sich beispielsweise um eine bestimmte Tageszeit, einen bestimmten Wochentag oder dergleichen handeln.

Der individuelle Segmentwiderstand für das Routensegment kann auch aus charakteristischen Klassendaten ermittelt werden, die in bezug auf das Routensegment nicht vorhersehbare Werte umfassen. Hierbei kann es sich im Zusammenhang mit dem Straßenverkehr beispielsweise um durch Unfälle bedingte Staus oder dergleichen handeln.

In weiterer Ausgestaltung kann der individuelle Segmentwiderstand für das Routensegment aus charakteristischen Klassendaten ermittelt werden, die in bezug auf das Routensegment vorhersehbare, statistisch nicht regelmäßige Werte umfassen. Hierbei kann es sich beispielsweise um Informationen über Baustellen, um Wetterdaten und dergleichen handeln.

Vorteilhaft können zur Ermittlung des individuellen Segmentwiderstands die dem Routensegment zugeordneten charakteristischen Klassendaten auf ein entsprechendes Routensegment abgebildet (gematcht) werden. Auch ist es denkbar, daß zur Erzeugung von Navigationsdaten der ermittelte individuelle Segmentwiderstand eines Routensegments auf dieses abgebildet wird. Durch die Abbildung wird erreicht, daß der Segmentwiderstand mit dem jeweiligen Routensegment verknüpft wird.

In weiterer Ausgestaltung können für das Routensegment charakteristische Klassendaten mittels eines Verfahrens zur Verkehrsdatenerfassung erzeugt werden. Dabei kann der individuelle Segmentwiderstand für das Routensegment vorteilhaft aus charakteristischen Klassendaten ermittelt werden, die in bezug auf das Routensegment Werte zur allgemeinen Verkehrslage umfassen.

Ein mögliches Verfahren zur Verkehrsdatenerfassung sieht beispielsweise den Einsatz sogenannter "Floating Cars" vor. "Floating Cars" sind Fahrzeuge, die mit geeigneten Geräten ausgestattet sind. Diese Geräte in Form entsprechend ausgebildeter Erfassungssensoren erzeugen Positionsdaten, indem sie beispielsweise per GPS (Global Positioning System) ihre Position messen. Die auf diese Weise ermittelten Positionsdaten werden dann zu einer Zentraleinheit übertragen. Dabei werden die einzelnen Positionsdaten von der Zentraleinheit erfaßt und in dieser zu entsprechenden Verkehrsinformationen weiterverarbeitet. Natürlich sind auch andere Verfahren zur Verkehrsdatenerfassung möglich, wie beispielsweise der Einsatz von Staumeldern und dergleichen.

Wenn die charakteristischen Klassendaten, aus denen der individuelle Segmentwiderstand ermittelt wird, in bezug auf das Routensegment Werte zur allgemeinen Verkehrslage umfassen, kann diese allgemeine Verkehrslage bei der Auswahl einer geeigneten Route beziehungsweise bei der Modifikation einer bereits festgelegten Route berücksichtigt werden. Der Begriff "Verkehrslage" beinhaltet dabei nicht nur Staus und Störungen, sondern auch erzielbare Durchschnittsgeschwindigkeiten und Staurisiken an Hand von statistischen Daten der Vergangenheit sowie Prognosen über die (künftig zu erwartende) Verkehrslage.

Vorteilhaft können für das Routensegment charakteristische Klassendaten mittels eines Informationsübertragungssystems, insbesondere eines Mobilfunksystems, erzeugt werden. Bei dem Mobilfunksystem kann es sich um ein Mobilfunknetz, beispielsweise das D2-Netz, handeln.

Wenn die Daten mittels eines Mobilfunksystems erzeugt werden, kann die für die Dynamisierung des Navigationsverfahrens notwendige Datenbasis geschaffen werden, indem Positionen von Mobilfunkteilnehmern während ihrer Telefongespräche - möglichst anonym - gespeichert und ausgewertet werden.

Die Erfindung ist jedoch nicht auf bestimmte Typen von Informationsübertragungssystemen beschränkt, so daß grundsätzlich jede Form von Informationsübertragungssystemen möglich ist, bei dem zur Übertragung von Informationen Endgeräte, möglichst mobile Endgeräte, verwendet werden. Geeignete Informationsübertragungssysteme sind beispielsweise Systeme zur Übertragung von Signalen, wie beispielsweise Systeme zur Übertragung von Daten, von Funksignalen und dergleichen. Vorteilhaft kann das Informatiohsübertragungssystem jedoch als Mobilfunksystem ausgebildet sein, in dem mobile Endgeräte in Form von Mobiltelefonen vorgesehen sind. Dabei werden aus Informationen der Mobiltelefone charakteristische Klassendaten für einzelne Routensegmente ermittelt. Insbesondere kann das Mobilfunksystem als zellulares Mobilfunksystem beziehungsweise Mobilfunknetz ausgebildet sein.

Bei Einsatz eines Mobilfunksystems als Informationsübertragungssystem können die charakteristischen Klassendaten für ein Routensegment beispielsweise aus Informationen bezüglich der Mobiltelefone gebildet werden, etwa in bezug auf der Bewegung der Mobiltelefone, beispielsweise zwischen verschiedenen Zellen (Handover zwischen Zellen) und/oder innerhalb einer Zelle, die zeitabhängige und/oder örtliche Verteilung der Mobiltelefone, die Anzahl und/oder die Dichte der Mobiltelefone pro Zelle, die Gesprächsaufbaurate und/oder -abbaurate und dergleichen. Natürlich ist auch denkbar, als zu erfassende charakteristische Klassendaten die Anrufhäufigkeit bei bestimmten Rufnummern zu erfassen, beispielsweise die im D2-Netz angebotene Rufnummer "22 666", unter der Verkehrsinformationen abgefragt werden können.

Wenn es sich bei dem Mobilfunknetz um ein zellulares Mobilfunknetz handelt, kann der Betreiber des Mobilfunknetzes beispielsweise problemlos feststellen, wieviel Mobiltelefone sich jeweils innerhalb einer einzigen Mobilfunkzelle befinden. Auch das Übertreten von Mobiltelefonen aus einer Mobilfunkzelle in eine andere Mobilfunkzelle (Handover) kann vom Mobilfunknetzbetreiber nachgewiesen werden, so daß diese Aussagen über die Bewegung von Mobiltelefonen in einem von den Mobilfunkzellen abgedeckten Gebiet machen kann.

Die Möglichkeit, Informationen von Mobilfunktelefonen zur Ermittlung von Verkehrsinformationen heranzuziehen, ist grundsätzlich bereits bekannt. So ist beispielsweise in der DE 198 36 089 A1 ein Verfahren zur Ermittlung von Verkehrsinformationen beschrieben, bei dem mit Hilfe von Basisstationen des Mobilfunksystems eine Ortsbestimmung von Mobiltelefonen, und damit letztendlich auch eine Bewegung der Mobiltelefone möglich ist. Der Inhalt dieser Offenlegungsschrift wird insoweit in die Beschreibung der vorliegenden Erfindung miteinbezogen.

In weiterer Ausgestaltung kann das Informationsübertragungssystem wenigstens ein mobiles Endgerät aufweisen, wobei ein Aktionsprofil des mobilen Endgeräts ermittelt wird und wobei aus dem Aktionsprofil des mobilen Endgeräts charakteristische Klassendaten für ein oder mehrere Routensegmente erzeugt wird/werden.

Dabei ist die Erfindung nicht auf bestimmte Informationen und Aktionsprofile im Zusammenhang mit dem Informationsübertragungssystem beziehungsweise den mobilen Endgeräten beschränkt. So ist es beispielsweise denkbar, daß Positionsdaten der mobilen Endgeräte erzeugt werden, die anschließend zu einem Positionsprofil zusammengefaßt werden. Ebenso ist es denkbar, Informationen bezüglich der Bewegung einer zeitabhängigen und/oder örtlichen Verteilung, einer Anzahl und/oder Dichte pro Flächeneinheit von mobilen Endgeräten zu erzeugen und zu entsprechenden Aktionsprofilen zusammenzufassen.

In weiterer Ausgestaltung kann ein wie vorstehend beschriebenes Verfahren zur Verwendung in einem Navigationssystem vorgesehen sein, wobei das Navigationssystem beispielsweise wenigstens ein mobiles Endgerät aufweist, das einem Nutzer des Navigationssystems zugeordnet ist. Weiterhin kann das Navigationssystem wenigstens eine Zentraleinheit aufweisen, wobei die Zentraleinheit zumindest zeitweilig mit dem wenigstens einen Endgerät kommuniziert. Schließlich kann wenigstens eine Speichereinrichtung vorgesehen sein, in der die Klassendaten und optional auch die Routensegmente zumindest zeitweilig abgelegt beziehungsweise abgespeichert sind. Zur Erzeugung und/oder Modifikation der Navigationsdaten kann wenigstens eine Routenmöglichkeit und/oder eine festgelegte Route zunächst in eine Anzahl von Routensegmenten unterteilt werden, wobei für die Routensegmente aus den in der Speichereinrichtung abgelegten charakteristischen Klassendaten individuelle Segmentwiderstände ermittelt werden und wobei die charakteristischen Klassendaten und/oder ermittelte individuelle Segmentwiderstände auf das Routensegment abgebildet wird/werden und wobei die einzelnen Segmentwiderstände verknüpft werden und aus den verknüpften Segmentwiderständen die Route festgelegt und/oder modifiziert wird.

Die Zentraleinheit kann beispielsweise als wenigstens ein elektronischer Rechner oder als Rechnernetzwerk ausgebildet sein.

Die einzelnen Daten können vorteilhaft zumindest zeitweilig in einer Speichereinrichtung abgespeichert sein. Die Speichereinrichtung kann entweder Bestandteil der Zentraleinheit sein, oder als zur Zentraleinheit separates Bauelement vorgesehen sein. Ebenso kann die Speichereinrichtung entweder Bestandteil eines Endgeräts sein, oder aber als zum Endgerät separates Bauelement vorliegen. Wichtig ist lediglich, daß die Zentraleinheit und/oder das wenigstens eine Endgerät zumindest zeitweilig Zugriff auf die Speichereinrichtung nehmen kann. Die Erfindung ist nicht auf bestimmte Arten von Speichereinrichtungen beschränkt. Beispielsweise kann diese als Festplatte, als Magnet-(band), als Diskette, als CD-ROM oder dergleichen ausgebildet sein.

Vorteilhaft kann die Festlegung und/oder Modifikation der Route in dem wenigstens einen Endgerät vorgenommen werden. Bei dem Endgerät kann es sich beispielsweise um ein spezielles, auf die Navigation zugeschnittenes Gerät handeln. Natürlich kann das Endgerät auch in anderer Form vorliegen, beispielsweise als Mobiltelefon oder dergleichen.

In weiterer Ausgestaltung ist es auch denkbar, daß die Festlegung und/oder Modifikation der Route in der Zentraleinheit vorgenommen und anschließend auf das wenigstens eine Endgerät übertragen wird. Bei einer solchen Ausgestaltung können die einzelnen Endgeräte einfacher und damit auch kostengünstiger hergestellt werden, da die eigentliche Ermittlung und Verarbeitung der Daten zentral in der Zentraleinheit erfolgt.

Wenn zur Erzeugung der charakteristischen Klassendaten ein wie vorstehend beschriebenes Informationsübertragungssystem verwendet wird, können die daraus resultierenden charakteristischen Klassendaten für jedes Routensegment vorteilhaft elektronisch innerhalb des Informationsübertragungssystems und/oder innerhalb der Zentraleinheit des Navigationssystems ermittelt werden. Wenn die charakteristischen Klassendaten innerhalb des Informationsübertragungssystems ermittelt werden, verfügt dieses vorzugsweise über eine eigene Zentraleinheit, in der die Informationen der einzelnen Endgeräte des Informationsübertragungssystems gesammelt und anschließend zu den charakteristischen Klassendaten weiterverarbeitet werden. In einem solchen Fall werden bereits fertiggestellte charakteristische Klassendaten vom Informationsübertragungssystem an die Zentraleinheit des Navigationssystems, die dann mit den einzelnen Endgeräten des Navigationssystems kommuniziert, übertragen. Wenn die charakteristischen Klassendaten innerhalb der Zentraleinheit des Navigationssystems ermittelt werden, werden die verschiedenen Informationen der Endgeräte vom Informationsübertragungssystem auf die Zentraleinheit des Navigationssystems übertragen. Dort werden aus den Informationen dann charakteristische Klassendaten ermittelt.

Durch die wie vorstehend beschriebenen erfindungsgemäßen Verfahren wird sowohl eine "On-Bord - Navigation" als auch eine "Off-Bord - Navigation" unterstützt. Bei einer "On Bord - Navigation" handelt es sich um ein Verfahren, bei dem sich die für die Navigation erforderlichen Komponenten beim Nutzer des Navigationssystems befinden. Die eigentliche Navigation erfolgt dann in den dem Nutzer zugeordneten Komponenten. Bei der "Off-Bord - Navigation" erfolgt die eigentliche Navigation nicht in den dem Nutzer zugeordneten Komponenten des Navigationssystems. Vielmehr erfolgt die eigentliche Navigation in einer Zentraleinheit, wobei die in der Zentraleinheit ermittelten Navigationsdaten anschließend auf ein dem Nutzer des Navigationssystems zugeordnetes Endgerät übertragen werden.

Die letztgenannte Möglichkeit wird nachfolgend an Hand eines Beispiels näher erläutert. In diesem Fall ist es beispielsweise denkbar, daß zur Navigation von einem Datendienst (ähnlich wie heute die Verkehrsmeldungen) die jeweiligen individuellen Segmentwiderstände für jedes Routensegment und damit die zu erwartenden Reisezeiten für die festgelegte Route übermittelt werden. Bei einer wie weiter oben bereits beschriebenen Streckenführung von München nach Düsseldorf, beispielsweise am Mittwoch, den 13. Juni 2001 ab 16 Uhr, wird die allgemeine Verkehrssituation um Nürnberg herum zur erwarteten Zeit berücksichtigt, wenn Nürnberg erreicht wird (beispielsweise gegen 17.30 Uhr). Wegen des dort vorherrschenden Berufsverkehrs und möglicherweise einer wegen einer Baustelle erhöhten Verkehrsdichte wird vielleicht diesmal die Strecke über Stuttgart empfohlen. Es wird also eine Verkehrsprognose (Nürnberg in 1 ½ Stunden) eingearbeitet. In die Gegenrichtung oder zu einer anderen Tageszeit kann beispielsweise eine andere Stecke gewählt werden, je nach Statistik. Ebenso kann die Streckenführung an einem Sonntag, oder an einem Tag vor einem Feiertag und dergleichen anders ausfallen. Durch das erfindungsgemäße Verfahren wird nunmehr eine echte dynamische Navigation möglich, mit Berücksichtigung der allgemeinen Verkehrslage statt nur Staus und mit Vorhersagen (Prognosen) statt nur aktuell vorhandenen Staus. Die Basis ist unter anderem ein kostengünstiges Informationsübertragungssystem beziehungsweise Verkehrsdatenerfassungssystem, bei dem es sich beispielsweise um ein bereits vorhandenes Mobilfunknetz handeln kann. Dabei können Daten des jeweiligen Netzes, die in dessen Normalbetrieb ohnehin anfallen, ausgenutzt werden. Weiterhin ist das erfindungsgemäße Verfahren räumlich nicht auf bestimmte Gebiete oder aber geographische Regionen, Länder und dergleichen beschränkt. Durch die Auswertung und Speicherung der charakteristischen Klassendaten stehen weiterhin Statistiken zur Verfügung, die in vergleichbaren Situationen zu Vorhersagen herangezogen werden können.

Gemäß einem weiteren Aspekt der Erfindung wird ein Computerprogrammprodukt bereitgestellt, mit einem von einem Computer lesbaren Programmedium, das, wenn das Programm geladen ist, Programmittel zur Durchführung der wie vorstehend beschriebenen erfindungsgemäßen Verfahren aufweist. Ein solches Computerprogrammprodukt kann beispielsweise von einer Speichereinrichtung, aus dem Internet oder dergleichen auf beziehungsweise in den Computer beziehungsweise eine Rechnereinheit geladen werden. Eine geeignete Speichereinrichtung kann beispielsweise dadurch gekennzeichnet sein, daß die Verfahrensschritte der wie vorstehend beschriebenen erfindungsgemäßen Verfahren in in der Speichereinrichtung gespeicherten Programmitteln integriert sind. Als Speichereinrichtung können zum Beispiel herkömmliche Speichermedien vorgesehen sein, die jedoch durch die Programmittel, beziehungsweise durch die Software, eine besondere Funktionalität verkörpern, durch die sie sich von den bekannten Speichermedien in der besonderen Weise der vorliegenden Erfindung unterscheiden.

Gemäß noch einem weiteren Aspekt der Erfindung wird ein Navigationssystem für eine Routenführung bereitgestellt, mit einer Einrichtung zum Festlegen einer Route aus wenigstens einer Routenmöglichkeit und/oder zum Modifizieren einer zunächst festgelegten Route, wobei die Einrichtung Mittel zum Unterteilen der wenigstens einen Routenmöglichkeit und/oder der zunächst festgelegten Route in eine Anzahl von Routensegmenten, Mittel zum Erzeugen eines Segmentwiderstands für jedes Routensegment sowie Mittel zum Verknüpfen der Segmentwiderstände und zum Festlegen und/oder Modifizieren der Route auf Grund der verknüpften Segmentwiderstände aufweist. Das Navigationssystem ist erfindungsgemäß **dadurch gekennzeichnet, daß** die Einrichtung Mittel zum Erzeugen charakteristischer Klassendaten für jedes Routensegment aufweist und daß weiterhin Mittel zur dynamischen Erzeugung eines individuellen Segmentwiderstands für jedes Routensegment aus zumindest einem Bestandteil der charakteristischen Klassendaten vorgesehen sind.

Das erfindungsgemäße Navigationssystem ist insbesondere gekennzeichnet durch Mittel zur Durchführung des oder der wie vorstehend beschriebenen erfindungsgemäßen Verfahren(s), so daß in bezug auf die Vorteile, Merkmale, Ausgestaltung sowie die Funktionsweise des Navigationssystems zur Vermeidung von Wiederholungen auf die Ausführungen zu den erfindungsgemäßen Verfahren vollinhaltlich Bezug genommen und hiermit verwiesen wird.

Vorteilhaft kann wenigstens ein Endgerät vorgesehen sein, das einem Nutzer des Navigationssystems zugeordnet ist. Hierbei handelt es sich vorteilhaft um ein mobiles Endgerät. Weiterhin kann das Endgerät vorteilhaft eine Einrichtung zur Eigenortung aufweisen, wobei es sich beispielsweise um eine GPS-Einrichtung (Global Positioning System) oder dergleichen handeln kann.

Vorteilhaft weist das Navigationssystem wenigstens eine Zentraleinheit auf. Diese Zentraleinheit kann beispielsweise wenigstens einen elektronischen Rechner beziehungsweise eine Rechnereinheit, ein Rechnernetzwerk oder dergleichen umfassen. Ebenfalls kann die Zentraleinheit als Servereinrichtung ausgebildet sein.

Vorzugsweise kann das Endgerät und/oder die Zentraleinheit eine Rechnereinheit aufweisen, wobei die Rechnereinheit vorzugsweise Mittel zur Durchführung des wie vorstehend beschriebenen erfindungsgemäßen Verfahrens aufweist.

In weiterer Ausgestaltung können die Mittel zum Erzeugen der charakteristischen Klassendaten als Einrichtung zur Verkehrslageerfassung ausgebildet sein.

Vorzugsweise können die Mittel zum Erzeugen der charakteristischen Klassendaten als Informationsübertragungssystem, insbesondere als Mobilfunksystem ausgebildet sein.

Vorteilhaft kann wenigstens eine Speichereinrichtung zum zumindest zeitweiligen Abspeichern der Routensegmente und/oder der charakteristischen Klassendaten und/oder der individuellen Segmentwiderstände vorgesehen sein.

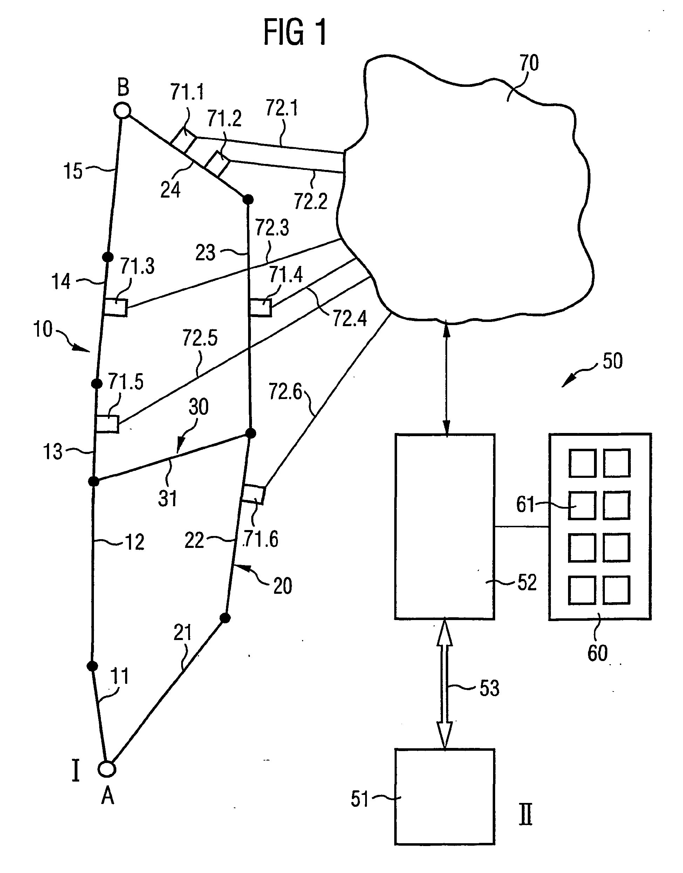

Die Erfindung wird nun an Hand eines Ausführungsbeispiels unter Bezugnahme auf die beiliegende Zeichnung näher erläutert. Dabei zeigt die einzige Figur 1 in schematischer Ansicht ein erfindungsgemäßes Navigationssystem, mit dem ein erfindungsgemäßes Navigationsverfahren durchgeführt werden kann.

In der Figur 1 ist im linken Teil mit I ein Bereich dargestellt, in dem eine Route von einem Startort A zu einem Zielort B festgelegt wird. Die Festlegung der geeigneten Route erfolgt dabei mittels eines Navigationssystems 50, das im rechts angeordneten Bereich II von Figur 1 dargestellt ist. Im Ausführungsbeispiel wird davon ausgegangen, daß das Navigationssystem 50 zum dynamischen Erzeugen von Navigationsdaten für eine Routenführung im Straßenverkehr eingesetzt wird.

Das Navigationssystem 50 besteht aus einer Zentraleinheit 52, die zum Erzeugen und Bearbeiten von Navigationsdaten wenigstens eine nicht explizit dargestellte Rechnereinheit aufweist. Die Zentraleinheit 52 ist zumindest zeitweilig über Kommunikationsverbindungen 53 mit einer Anzahl von mobilen Endgeräten 51 verbunden, wobei jeweils ein mobiles Endgerät 51 jeweils einem Nutzer des Navigationssystems 50 zugeordnet ist.

Weiterhin ist die Zentraleinheit 52 zumindest zeitweilig mit einer Speichereinrichtung 60 verbunden, in der verschiedene Daten und Informationen abgespeichert sind, die im weiteren Verlauf der Beschreibung noch näher erläutert werden. Schließlich ist die Zentraleinheit 52 mit einem Informationsübertragungssystem 70 verbunden, bei dem es sich im vorliegenden Ausführungsbeispiel um ein zellulares Mobilfunknetz, beispielsweise das D2-Netz, handelt. Das Informationsübertragungssystem 70 weist eine Reihe von Endgeräten 71 (71.1 bis 71.6) auf, die entsprechenden Nutzern des Informationsübertragungssystems 70 zugeordnet sind und bei denen es sich im vorliegenden Ausführungsbeispiel um Mobiltelefone handelt. Im Ausführungsbeispiel sind der besseren Übersicht halber nur sechs Endgeräte dargestellt. Natürlich ist die Erfindung nicht auf eine bestimmte Anzahl von Endgeräten beschränkt.

Nachfolgend wird nun das Verfahren zum dynamischen Erzeugen von Navigationsdaten für eine Routenführung mittels des Navigationssystems 50 beschrieben.

Zunächst legt der Nutzer des Systems über sein Endgerät 51 einen Startort A sowie einen Zielort B fest. Diese Koordinaten werden über die Kommunikationsverbindung 53 an die Zentraleinheit 52 übertragen. In der Zentraleinheit 52 werden nun die für die Routenführung geeigneten Navigationsdaten ermittelt. Dazu wird zunächst eine geeignete Route aus wenigstens einer Routenmöglichkeit ermittelt. In der Zentraleinheit 52 erfolgt grundsätzlich also das, was im Bereich I von Figur 1 dargestellt ist. Im Ausführungsbeispiel sind insgesamt drei Routenmöglichkeiten 10, 20, 30 dargestellt. Jede Routenmöglichkeit 10, 20, 30 wird in der Zentraleinheit 52 in eine Anzahl von Routensegmenten 11, 12, 13, 14, 15 beziehungsweise 21, 22, 23, 24 beziehungsweise 31 unterteilt. Die erste Routenmöglichkeit 10 zwischen den Orten A und B besteht aus den Routensegmenten 11, 12, 13, 14, 15. Eine zweite Routenmöglichkeit 20 besteht aus den Routensegmenten 21, 22, 23, 24. Eine dritten Routenmöglichkeit 30 zwischen den Orten A und B besteht beispielsweise aus den Routensegmenten 11, 12, 31, 23, 24 beziehungsweise 21, 22, 31, 13, 14, 15.

Die Erzeugung der Navigationsdaten für die Routenführung erfolgt nun derart, daß jedem Routensegment 11 bis 15, 21 bis 24, 31 in der Zentraleinheit 52 ein Segmentwiderstand zugeordnet wird. Der Segmentwiderstand entspricht dabei der im jeweiligen Routensegment zu erwartenden Reisezeit und/oder Reisegeschwindigkeit. Die einzelnen Segmentwiderstände werden in der Zentraleinheit 52 anschließend verknüpft. Auf Grund der verknüpften Segmentwiderstände wird dann eine geeignete Route festgelegt und an das mobile Endgerät 51 des Systemnutzers übertragen.

Im vorliegenden Ausführungsbeispiel soll davon ausgegangen werden, daß in der Zentraleinheit 52 als geeignete Route die Route 20 mit den Routensegmenten 21, 22, 23, 24 festgelegt wurde.

Bei bisher bekannten Navigationssystemen wird jedem Routensegment ein statischer, nicht veränderlicher Segmentwiderstand zugeordnet. Die einzelnen Segmentwiderstände beziehungsweise die daraus resultierenden Reisezeiten der verschiedenen Routensegmente sind dazu üblicherweise auf den Landkarten-CD-ROMs des Navigationssystems mitcodiert. Diese Segmentwiderstände haben jedoch den Nachteil, daß sie nur sehr pauschal eingeteilt sind. Weiterhin können bisher bekannte Navigationssysteme nur aktuelle Verkehrsstörungen berücksichtigen, nicht jedoch statistisch zu erwartende Reisezeiten.

Um diese Nachteile zu umgehen, ist nunmehr vorgesehen, daß in der Zentraleinheit 52 für jedes Routensegment 11 bis 15, 21 bis 24, 31 der Segmentwiderstand dynamisch erzeugt wird, indem jedem Routensegment 11 bis 15, 21 bis 24, 31 eine Klasse 61 von für das Routensegment charakteristischen Daten zugeordnet wird. Diese charakteristischen Klassendaten 61 sind in der Speichereinrichtung 60 abgespeichert und können auf unterschiedlichste Art und Weise erzeugt werden. Wenn nun der Segmentwiderstand eines jeden Routensegments in der Zentraleinheit 52 ermittelt wird, greift die Zentraleinheit 52 zunächst auf die Speichereinrichtung 60 zu, und liest dort die entsprechenden charakteristischen Klassendaten 61 für das jeweilige Routensegment aus. Auf der Basis dieser charakteristischen Klassendaten 61 wird dann ein individueller Segmentwiderstand für das Routensegment ermittelt.

Als geeignete charakteristische Klassendaten 61 für die Routensegmente kommen beispielsweise in bezug auf das Routensegment aktuelle Werte, Prognosewerte, Attributwerte, zeitabhängig und/oder zeitlich variable und/oder ortsabhängige und/oder örtlich variable, statistisch erfaßbare und/oder zu erwartende, nicht vorhersehbare, vorhersehbare, statistisch nicht regelmäßige Werte, Werte zur allgemeinen Verkehrslage und dergleichen in Frage.

Durch die Verwendung charakteristischer Klassendaten 61 zur Bestimmung der individuellen Segmentwiderstände pro Routensegment wird es nunmehr möglich, bei der Auswahl einer geeigneten Route auch die allgemeine Verkehrslage zu berücksichtigen. Als Verkehrslage werden dabei nicht nur Staus und Störungen, sondern auch erzielbare Durchschnittsgeschwindigkeiten und Staurisiken an Hand von statistischen Daten der Vergangenheit sowie künftigen Prognosen für die Verkehrslage verstanden.

Durch die erfindungsgemäße Erzeugung von Navigationsdaten wird es folglich auch möglich, bei der Festlegung der Route von Punkt A nach Punkt B auch solche Verkehrssituationen zu berücksichtigen, die zu einem späteren Zeitpunkt in einem Routensegment, das erst später erreicht wird, auftreten werden. Bei der Festlegung der geeigneten Route wird somit auch eine Verkehrsprognose für die später erreichten Routensegmente eingearbeitet.

Vorteilhaft werden die einzelnen Segmentwiderstände regelmäßig, möglichst in kurzen Abständen, erneut bestimmt. Auf diese Weise kann eine zunächst festgelegte Route während der Fahrt von Punkt A nach Punkt B immer noch modifiziert werden, sofern dies erforderlich wird. Dazu weist die Endeinrichtung 51 vorteilhaft eine Einrichtung zur Eigenortung (nicht dargestellt) auf. Über die Einrichtung zur Eigenortung kann der Zentraleinheit 52 jederzeit mitgeteilt werden, wo sich der Nutzer des Navigationssystems 50, beziehungsweise dessen Endgerät 51, befindet.

Angenommen, als geeignete Route wurde zunächst die Route 20 festgelegt. Der Fahrer möge sich derzeit im Routensegment 21 befinden. Wenn nun im Routensegment 23 ein Unfall passiert, werden diese Informationen als charakteristische Klassendaten für das Routensegment 23 in der Speichereinrichtung 60 abgespeichert. Da die individuellen Segmentwiderstände in regelmäßigen Abständen ermittelt werden, wird bei der nächsten Ermittlung des Segmentwiderstands für das Routensegment 23 ein drastisch ansteigender Widerstandswert ermittelt werden. Auf Grund dieses angestiegenen Widerstandswerts wird dann in der Zentraleinheit 52 überprüft, ob und wenn ja, welche Ausweichroute empfohlen wird.

Im Ausführungsbeispiel gemäß Figur 1 könnte eine derartige Ausweichroute über die Route 30 erfolgen. Dem Nutzer des Navigationssystems 50 würde demnach im mobilen Endgerät 51 angezeigt, daß dieser zur Erreichung seines Ziels B nicht mehr das Routensegment 23, sondern das Routensegment 31 befahren soll. Sollte sich der Stau im Routensegment 23 bis zur Erreichung des Knotens zwischen dem Routensegment 22 und dem Routensegment 31 wieder aufgelöst haben, führt dies zu einem entsprechend verringerten individuellen Segmentwiderstands für das Routensegment 23, so daß die ursprünglich festgelegte Route 20 beibehalten werden könnte.

Wie weiter oben beschrieben wurde, können die charakteristischen Klassendaten 61 für jedes Routensegment auf unterschiedlichste Art und Weise bestimmt beziehungsweise ermittelt werden.

Eine vorteilhafte Ermittlung charakteristischer Klassendaten kann beispielsweise über das als Mobilfunknetz ausgebildete Informationsübertragungssystem 70 erfolgen. Dazu können beispielsweise Positionen von Mobilfunkteilnehmern während ihrer Telefongespräche vom Informationsübertragungssystem 70 gespeichert und ausgewertet werden. So ist es beispielsweise möglich, daß Positionsinformationen aktiver Teilnehmer im Mobilfunknetz, die gerade ihre Mobiltelefone 71 (71.1 bis 71.6) benutzen, gesammelt werden. Während mobiler Telefongespräche kommunizieren nämlich die Mobiltelefone 71 (71.1 bis 71.6) über entsprechende Übertragungswege 72 (72.1 bis 72.6) mit dem Informationsübertragungssystem 70, und hier insbesondere mit entsprechenden Festnetzteilen, beispielsweise Basisstationen. Aus diesen Basisstationen können beispielsweise die bei normalen mobilen Telefongesprächen mit den Mobiltelefonen 71 (71.1 bis 71.6) anfallenden Daten ausgelesen werden. Diese Positionsinformationen liefern dann eine Art Bewegungsvektoren, da die einzelnen Werte (Positionsdaten) der jeweiligen Mobiltelefone 71 (71.1 bis 71.6) regelmäßig (beispielsweise alle 480 msec) erneuert werden. Die im Informationsübertragungssystem 70 erzeugten Bewegungsvektoren der einzelnen Endgeräte 71 (71.1 bis 71.6) können dann an die Zentraleinheit 52 übertragen und dort auf einer Landkarte beziehungsweise den einzelnen Routensegmenten abgebildet werden. Auf diese Weise läßt sich eine aktuelle Verkehrssituation (nicht nur die Verkehrsstaus, sondern die gesamte Verkehrsdichte) pro Routensegment ermitteln.

Die auf diese Weise gewonnene Information zur Verkehrssituation kann dann mit zeitlichen Daten, einem Datum und dergleichen verknüpft werden. So steht für jedes Routensegment für jede Zeit eine zu erwartende Reisezeit zur Verfügung. Die einzelnen Daten werden als charakteristische Klassendaten 61 in der Speichereinrichtung 60 abgelegt, so daß sie auch künftig als Prognosedaten zur Verfügung stehen.

Durch das erfindungsgemäße Verfahren beziehungsweise das erfindungsgemäße Navigationssystem 50 wird eine dynamische Navigation möglich, bei der die aktuelle und künftige Verkehrslage in jedem Routensegment berücksichtigt werden kann. Die Basis zur Erzeugung der charakteristischen Klassendaten 61 pro Routensegment ist dabei unter anderem ein kostengünstiges Verkehrsdatenerfassungssystem, bei dem es sich im vorliegenden Fall um das Mobilfunknetz 70 handelt. Im Mobilfunknetz 70 werden Daten ausgenutzt, die in dessen Normalbetrieb sowieso anfallen. Durch die Auswertung der charakteristischen Klassendaten 61 in der Zentraleinheit 52 sowie die Speicherung der charakteristischen Klassendaten 61 in der Speichereinrichtung 60 stehen Statistiken zur Verfügung, die in vergleichbaren Situationen in der Zukunft ebenfalls zu Vorhersagen (Prognosen) herangezogen werden können.

## Patentansprüche

1. Verfahren zum Erzeugen von Navigationsdaten für eine Routenführung mittels eines Navigationssystems (50), bei dem mittels der Navigationsdaten im Navigationssystem (50) eine Route aus wenigstens einer Routenmöglichkeit (10, 20, 30) ermittelt wird, wobei jede Routenmöglichkeit (10, 20, 30) in eine Anzahl von Routensegmenten (11, 12, 13, 14, 15, 21, 22, 23, 24, 31) unterteilt wird und bei dem im Navigationssystem (50) die Navigationsdaten für die Routenführung erzeugt werden, indem jedem Routensegment (11-15, 21-24, 31) ein Segmentwiderstand zugeordnet wird und indem die einzelnen Segmentwiderstände verknüpft werden und auf Grund der verknüpften Segmentwiderstände die geeignete Route festgelegt wird, **dadurch gekennzeichnet, daß** der Segmentwiderstand eines jeden Routensegments (11-15, 21-24, 31) im Navigationssystem (50) dynamisch erzeugt wird, wobei sich der Segmentwiderstand über die Zeit verändern kann, indem jedem Routensegment (11-15, 21-24, 31) eine Klasse (61) von für das Routensegment (11-15, 21-24, 31) charakteristischen Daten zugeordnet wird und indem zumindest aus einem Bestandteil der charakteristischen Klassendaten (61) ein individueller Segmentwiderstand für das Routensegment (11-15, 21-24, 31) ermittelt wird.

2. Verfahren nach Anspruch 1, **dadurch gekennzeichnet, daß** eine festgelegte Route (20) im Navigationssystem (50) weiterhin modifiziert wird oder werden kann, indem für jedes Routensegment (21-24) der Route (20) zumindest aus einem Bestandteil der charakteristischen Klassendaten (61) ein individueller Segmentwiderstand ermittelt wird und indem die einzelnen Segmentwiderstände verknüpft werden und auf Grund der verknüpften Segmentwiderstände die Route (20) modifiziert wird.

3. Verfahren zum Modifizieren von Navigationsdaten für eine Routenführung mittels eines Navigationssystems (50), bei dem mittels der Navigationsdaten im Navigationssystem (50) eine zunächst festgelegte Route (20) modifiziert wird, wobei die Route (20) in eine Anzahl von Routensegmenten (21-24) unterteilt wird und bei dem im Navigationssystem (50) die Navigationsdaten für jedes Routensegment (21-24) erzeugt werden, indem jedem Routensegment (21-24) ein Segmentwiderstand zugeordnet wird und indem die einzelnen Segmentwiderstände verknüpft werden und auf Grund der verknüpften Segmentwiderstände die Route (20) modifiziert wird, **dadurch gekennzeichnet, daß** der Segmentwiderstand eines jeden Routensegments (21-24) im Navigationssystem (50) dynamisch erzeugt wird, wobei sich der Segmentwiderstand über die Zeit verändern kann, indem jedem Routensegment (21-24) eine Klasse (61) von für das Routensegment (21-24) charakteristischen Daten zugeordnet wird und indem zumindest aus einem Bestandteil der charakteristischen Klassendaten (61) ein individueller Segmentwiderstand für das Routensegment (21-24) ermittelt wird.

4. Verfahren nach einem der Ansprüche 1 bis 3, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) aktuelle Werte umfassen.

5. Verfahren nach einem der Ansprüche 1 bis 4, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) Prognosewerte umfassen.

6. Verfahren nach einem der Ansprüche 1 bis 5, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) Attributwerte umfassen.

7. Verfahren nach einem der Ansprüche 1 bis 6, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) zeitabhängige und/oder zeitlich variable und/oder ortsabhängige und/oder örtlich variable Werte umfassen.

8. Verfahren nach einem der Ansprüche 1 bis 7, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) statistisch erfaßbare und/oder zu erwartende Werte umfassen.

9. Verfahren nach einem der Ansprüche 1 bis 8, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) nicht vorhersehbare Werte umfassen.

10. Verfahren nach einem der Ansprüche 1 bis 9, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) vorhersehbare, statistisch nicht regelmäßige Werte umfassen.

11. Verfahren nach einem der Ansprüche 1 bis 10, **dadurch gekennzeichnet, daß** zur Ermittlung des individuellen Segmentwiderstands die dem Routensegment (11-15, 21-24, 31) zugeordneten charakteristischen Klassendaten (61) auf ein entsprechendes Routensegment (11-15, 21-24, 31) abgebildet werden.

12. Verfahren nach einem der Ansprüche 1 bis 11, **dadurch gekennzeichnet, daß** zur Erzeugung von Navigationsdaten der ermittelte individuelle Segmentwiderstand eines Routensegments (11-15, 21-24, 31) auf dieses abgebildet wird.

13. Verfahren nach einem der Ansprüche 1 bis 12, **dadurch gekennzeichnet, daß** für das Routensegment (11-15, 21-24, 31) charakteristische Klassendaten (61) mittels eines Verfahrens zur Verkehrsdatenerfassung erzeugt werden.

14. Verfahren nach Anspruch 13, **dadurch gekennzeichnet, daß** der individuelle Segmentwiderstand für das Routensegment (11-15, 21-24, 31) aus charakteristischen Klassendaten (61) ermittelt wird, die in bezug auf das Routensegment (11-15, 21-24, 31) Werte zur allgemeinen Verkehrslage umfassen.

15. Verfahren nach einem der Ansprüche 1 bis 14, **dadurch gekennzeichnet, daß** für das Routensegment (11-15, 21-24, 31) charakteristische Klassendaten (61) mittels eines Informationsübertragungssystems (70), insbesondere eines Mobilfunksystems, erzeugt werden.

16. Verfahren nach Anspruch 15, **dadurch gekennzeichnet, daß** das Informationsübertragungssystem (70) wenigstens ein mobiles Endgerät (71) aufweist, daß ein Aktionsprofil des mobilen Endgeräts (71) ermittelt wird und daß aus dem Aktionsprofil des mobilen Endgeräts (71) charakteristische Klassendaten (61) für ein oder mehrere Routensegmente (11-15, 21-24, 31) erzeugt wird/werden.

17. Verfahren nach einem der Ansprüche 1 bis 16 zur Verwendung in einem Navigationssystem (50), das wenigstens ein mobiles Endgerät (51) aufweist, das einem Nutzer des Navigationssystems (50) zugeordnet ist, das wenigstens eine Zentraleinheit (52) aufweist, wobei die Zentraleinheit (52) zumindest zeitweilig mit dem wenigstens einen Endgerät (51) kommuniziert, und in dem wenigstens eine Speichereinrichtung (60) vorgesehen ist, in der die Klassendaten (61) und optional auch die Routensegmente (11-15, 21-24, 31) zumindest zeitweilig abgelegt sind, **dadurch gekennzeichnet, daß** zur Erzeugung und/oder Modifikation der Navigationsdaten wenigstens eine Routenmöglichkeit (10, 20, 30) und/oder eine festgelegte Route zunächst in eine Anzahl von Routensegmenten (11-15, 21-24, 31) unterteilt wird, daß für die Routensegmente (11-15, 21-24, 31) aus den in der Speichereinrichtung (60) abgelegten charakteristischen Klassendaten (61) individuelle Segmentwiderstände ermittelt werden, wobei die charakteristischen Klassendaten (61) und/oder der ermittelte individuelle Segmentwiderstand auf das Routensegment (11-15, 21-24, 31) abgebildet wird/werden und daß die einzelnen Segmentwiderstände verknüpft werden und aus den verknüpften Segmentwiderständen die Route festgelegt und/oder modifiziert wird.

18. Verfahren nach Anspruch 17, **dadurch gekennzeichnet, daß** die Festlegung und/oder Modifikation der Route in dem wenigstens einen Endgerät (51) vorgenommen wird.

19. Verfahren nach Anspruch 17 oder 18, **dadurch gekennzeichnet, daß** die Festlegung und/oder Modifikation der Route in der Zentraleinheit (52) vorgenommen und anschließend auf das wenigstens eine Endgerät (51) übertragen wird.

20. Computerprogrammprodukt, mit einem von einem Computer lesbaren Programmedium, das, wenn das Programm geladen ist, Programmittel zur Durchführung des Verfahrens nach einem der Ansprüche 1 bis 19 aufweist.

21. Navigationssystem für eine Routenführung, mit einer Einrichtung zum Festlegen einer Route aus wenigstens einer Routenmöglichkeit (10, 20, 30) und/oder zum Modifizieren einer zunächst festgelegten Route, wobei die Einrichtung Mittel zum Unterteilen der wenigstens einen Routenmöglichkeit (10, 20, 30) und/oder der zunächst festgelegten Route in eine Anzahl von Routensegmenten (11-15, 21-24, 31), Mittel zum Erzeugen eines Segmentwiderstands für jedes Routensegment (11-15, 21-24, 31) sowie Mittel zum Verknüpfen der Segmentwiderstände und zum Festlegen und/oder Modifizieren der Route auf Grund der verknüpften Segmentwiderstände aufweist, **dadurch gekennzeichnet, daß** die Einrichtung Mittel zum Erzeugen charakteristischer Klassendaten (61) für jedes Routensegment (11-15, 21-24, 31) aufweist und daß weiterhin Mittel zur dynamischen Erzeugung eines individuellen Segmentwiderstands für jedes Routensegment (11-15, 21-24, 31) aus zumindest einem Bestandteil der charakteristischen Klassendaten (61) vorgesehen sind.

22. Navigationssystem nach Anspruch 21, **gekennzeichnet durch** Mittel zur Durchführung des Verfahrens nach einem der Ansprüche 1 bis 19.

23. Navigationssystem nach Anspruch 21 oder 22, **dadurch gekennzeichnet, daß** wenigstens ein Endgerät (51) vorgesehen ist, das einem Nutzer des Navigationssystems (50) zugeordnet ist.

24. Navigationssystem nach Anspruch 23, **dadurch gekennzeichnet, daß** das Endgerät (51) eine Einrichtung zur Eigenortung aufweist.

25. Navigationssystem nach einem der Ansprüche 21 bis 24, **dadurch gekennzeichnet, daß** wenigstens eine Zentraleinheit (52) vorgesehen ist.

26. Navigationssystem nach einem der Ansprüche 23 bis 25, **dadurch gekennzeichnet, daß** das Endgerät (51) und/oder die Zentraleinheit (52) eine Rechnereinheit aufweist/aufweisen und daß die Rechnereinheit Mittel zur Durchführung des Verfahrens nach einem der Ansprüche 1 bis 19 aufweist.

27. Navigationssystem nach einem der Ansprüche 21 bis 26, **dadurch gekennzeichnet, daß** die Mittel zum Erzeugen der charakteristischen Klassendaten (61) als Einrichtung zur Verkehrslageerfassung ausgebildet sind.

28. Navigationssystem nach einem der Ansprüche 21 bis 26, **dadurch gekennzeichnet, daß** die Mittel zum Erzeugen der charakteristischen Klassendaten (61) als Informationsübertragungssystem (70), insbesondere als Mobilfunksystem ausgebildet sind.

29. Navigationssystem nach einem der Ansprüche 21 bis 28, **dadurch gekennzeichnet, daß** wenigstens eine Speichereinrichtung (60) zum zumindest zeitweiligen Abspeichern der Routensegmente (11-15, 21-24, 31) und/oder der charakteristischen Klassendaten (61) und/oder der individuellen Segmentwiderstände vorgesehen ist.

## Claims

1. Method for generating navigating data for route guidance by means of a navigation system (50), wherein one route is determined from at least one route possibility (10, 20, 30) by means of the navigating data in the navigation system (50), each route possibility (10, 20, 30) being divided into a number of route segments (11, 12, 13, 14, 15, 21, 22, 23, 24, 31) and wherein the navigating data for the route guidance are generated in the navigation system (50), by associating each route segment (11-15, 21-24, 31) with a segment resistance and by linking the individual segment resistances and on the basis of the linked segment resistances ascertaining the suitable route, **characterised in that** the segment resistance of each route segment (11-15, 21-24, 31) is generated dynamically in the navigation system (50), while the segment resistance can change over time, wherein each route segment (11-15, 21-24, 31) is allocated a category (61) of data characteristic of the route segment (11-15, 21-24, 31) and an individual segment resistance for the route segment (11-15, 21-24, 31) is determined at least from a component of the characteristic category data (61).

2. Method according to claim 1, **characterised in that** a route (20) fixed in the navigation system (50) is further modified or may be modified, by determining for each route segment (21-24) of the route (20) an individual segment resistance at least from one component of the characteristic category data (61) and by linking the individual segment resistances and modifying the route (20) on the basis of the linked segment resistances.

3. Method for modifying navigating data for route guidance by means of a navigation system (50), wherein an initially fixed route (20) is modified by means of the navigating data in the navigation system (50), the route (20) being divided into a number of route segments (21-24) and wherein the navigating data for each route segment (21-24) are generated in the navigation system (50), by associating each route segment (21-24) with a segment resistance and by linking the individual segment resistances and modifying the route (20) on the basis of the linked segment resistances, **characterised in that** the segment resistance of each route segment (21-24) is generated dynamically in the navigation system (50), while the segment resistance can change over time, wherein each route segment (21-24) is allocated a category (61) of data characteristic of the route segment (21-24) and an individual segment resistance for the route segment (21-24) is determined at least from a component of the characteristic category data (61).

4. Method according to one of claims 1 to 3, **characterised in that** the individual segment resistance for the route segment (11-15, 21-24, 31) is determined from characteristic category data (61) that encompass current values in relation to the route segment (11-15, 21-24, 31).

5. Method according to one of claims 1 to 4, **characterised in that** the individual segment resistance for the route segment (11-15, 21-24, 31) is determined from characteristic category data (61) that encompass prognostic values in relation to the route segment (11-15, 21-24, 31).

6. Method according to one of claims 1 to 5, **characterised in that** the individual segment resistance for the route segment (11-15, 21-24, 31) is determined from characteristic category data (61) that encompass attribute values in relation to the route segment (11-15, 21-24, 31).

7. Method according to one of claims 1 to 6, **characterised in that** the individual segment resistance for the route segment (11-15, 21-24, 31) is determined from characteristic category data (61) that encompass time-dependent and/or time-variable and/or location-dependent and/or locally variable values in relation to the route segment (11-15, 21-24, 31).

8. Method according to one of claims 1 to 7, **characterised in that** the individual segment resistance for the route segment (11-15, 21-24, 31) is determined from characteristic category data (61) that encompass statistically detectable and/or expected values in relation to the route segment (11-15, 21-24, 31).

9. Method according to one of claims 1 to 8, **characterised in that** the individual segment resistance for the route segment (11-15, 21-24, 31) is determined from characteristic category data (61) that encompass unpredictable values in relation to the route segment (11-15, 21-24, 31).

10. Method according to one of claims 1 to 9, **characterised in that** the individual segment resistance for the route segment (11-15, 21-24, 31) is determined from characteristic category data (61) that encompass predictable, statistically irregular values in relation to the route segment (11-15, 21-24, 31).

11. Method according to one of claims 1 to 10, **characterised in that** in order to determine the individual segment resistance the characteristic category data (61) associated with the route segment (11-15, 21-24, 31) are imaged on a corresponding route segment (11-15, 21-24, 31).

12. Method according to one of claims 1 to 11, **characterised in that** in order to generate navigating data the individual segment resistance determined for a route segment (11-15, 21-24, 31) is imaged thereon.

13. Method according to one of claims 1 to 12, **characterised in that** category data (61) that are characteristic for the route segment (11-15, 21-24, 31) are generated by means of a method of obtaining traffic data.

14. Method according to claim 13, **characterised in that** the individual segment resistance for the route segment (11-15, 21-24, 31) is determined from characteristic category data (61) that encompass values relating to the general traffic situation in relation to the route segment (11-15, 21-24, 31).

15. Method according to one of claims 1 to 14, **characterised in that** category data (61) that are characteristic for the route segment (11-15, 21-24, 31) are generated by means of an information transmission system (70), particularly a mobile telephony system.

16. Method according to claim 15, **characterised in that** the information transmission system (70) comprises at least one mobile terminal (71), **in that** an action profile of the mobile terminal (71) is obtained and **in that** category data (61) that are characteristic for one or more route segments (11-15, 21-24, 31) are generated from the action profile of the mobile terminal (71).

17. Method according to one of claims 1 to 16, for use in a navigation system (50) that comprises at least one mobile terminal (51) associated with a user of the navigation system (50), that has at least one central unit (52), the central unit (52) communicating at least intermittently with the at least one terminal (51), and wherein at least one memory device (60) is provided in which the category data (61) and optionally also the route segments (11-15, 21-24, 31) are stored at least intermittently, **characterised in that,** in order to generate and/or modify the navigating data, at least one route possibility (10, 20, 30) and/or a fixed route is first divided into a number of route segments (11-15, 21-24, 31), **in that** individual segment resistances are determined for the route segments (11-15, 21-24, 31) from the characteristic category data (61) stored in the memory device (60), the characteristic category data (61) and/or the individual segment resistance obtained being imaged on the route segment (11-15, 21-24, 31) and **in that** the individual segment resistances are linked and from the linked segment resistances the route is fixed and/or modified.

18. Method according to claim 17, **characterised in that** the fixing and/or modification of the route is carried out in the at least one terminal (51).

19. Method according to claim 17 or 18, **characterised in that** the fixing and/or modification of the route is carried out in the central unit (52) and is then transmitted to the at least one terminal (51).

20. Computer program product having a computer-readable program medium which, when the program is loaded, has program means for carrying out the method according to one of claims 1 to 19.

21. Navigation system for route guidance, having a device for determining one route from at least one route possibility (10, 20, 30) and/or for modifying a route that has initially been fixed, the device having means for subdividing the at least one route possibility (10, 20, 30) and/or the initially fixed route into a number of route segments (11-15, 21-24, 31), means for producing a segment resistance for each route segment (11-15, 21-24, 31) and means for linking the segment resistances and for fixing and/or modifying the route on the basis of the linked segment resistances, **characterised in that** the device comprises means for generating characteristic category data (61) for each route segment (11-15, 21-24, 31), and that moreover means are provided for dynamically producing an individual segment resistance for each route segment (11-15, 21-24, 31) from at least one component of the characteristic category data (61).

22. Navigation system according to claim 21, **characterised by** means for carrying out the method according to one of claims 1 to 19.

23. Navigation system according to claim 21 or 22, **characterised in that** at least one terminal (51) is provided which is associated with a user of the navigation system (50).

24. Navigation system according to claim 23, **characterised in that** the terminal (51) comprises a device for locating itself.

25. Navigation system according to one of claims 21 to 24, **characterised in that** at least one central unit (52) is provided.

26. Navigation system according to one of claims 23 to 25, **characterised in that** the terminal (51) and/or the central unit (52) comprise(s) a computer unit and **in that** the computer unit comprises means for carrying out the method according to one of claims 1 to 19.

27. Navigation system according to one of claims 21 to 26, **characterised in that** the means for generating the characteristic category data (61) are in the form of a device for detecting the traffic situation.

28. Navigation system according to one of claims 21 to 26, **characterised in that** the means for generating the characteristic category data (61) are in the form of an information transmission system (70), particularly a mobile telephony system.

29. Navigation system according to one of claims 21 to 28, **characterised in that** at least one memory device (60) is provided for at least intermittently storing the route segments (11-15, 21-24, 31) and/or the characteristic category data (61) and/or the individual segment resistances.

## Revendications

1. Procédé de production de données de navigation pour un indicateur d'itinéraire à l'aide d'un système de navigation (50) avec lequel un itinéraire proposant au moins une possibilité d'itinéraire (10, 20, 30) est transmise à l'aide des données de navigation comprises dans le système de navigation (50), sachant que chaque possibilité d'itinéraire (10, 20, 30) est sous-divisée en un nombre de segments d'itinéraires (11, 12, 13, 14, 15, 21, 22, 23, 24, 31) et avec lequel les données de navigation pour l'indicateur d'itinéraire, comprises dans le système de navigation (50) sont générées en affectant une traînée de segment à chaque segment d'itinéraire (11-15, 21-24, 31) et en connectant chacune des traînées de segment et où en raison des traînées de segment connectées, le bon itinéraire est déterminé, **caractérisé en ce que** la traînée de segment de chaque segment d'itinéraire (11-15, 21-24, 31) est généré de façon dynamique dans le système de navigation (50), sachant que la traînée de segment peut changer au fil du temps, en ce sens où une classe (61) de données caractéristiques pour le segment d'itinéraire (11-15, 21-24, 31) est affectée à chaque segment d'itinéraire et où au moins une traînée de segment individuelle est transmise pour le segment d'itinéraire (11-15, 21-24, 31) à partir d'un composant des données de classe caractéristiques (61).

2. Procédé selon la revendication 1, **caractérisé en ce qu'**une route déterminée (20) dans le système de navigation (50) peut être modifiée, en ce sens où pour chaque segment d'itinéraire (21-24) de l'itinéraire (20) une traînée de segment individuelle peut être transmise au moins à partir d'un composant des données de classe caractéristiques (61) et où chacune des traînées de segment sont connectées, traînées de segment connectées grâce auxquelles l'itinéraire (20) est modifié.

3. Procédé de modification de données de navigation pour un indicateur d'itinéraire à l'aide d'un système de navigation (50) dans lequel à l'aide des données de navigation comprises dans le système de navigation (50), un itinéraire (20) préalablement déterminé, est modifié, sachant que l'itinéraire (20) est sous-divisé en un nombre de segments d'itinéraire (21-24) et dans lequel les données de navigation pour chaque segment d'itinéraire (21-24) sont générées dans le système de navigation (50), en ce sens où une traînée de segment est affectée à chaque segment d'itinéraire (21-24) et dans lequel chacune des traînées de segment sont connectées, traînées de segment connectées grâce auxquelles l'itinéraire (20) est modifié, **caractérisé en ce que** la traînée de segment de chaque segment d'itinéraire (21-24) est générée de façon dynamique dans le système de navigation (50), sachant que la traînée de segment peut changer au fil du temps, en ce sens où une classe (61) de données caractéristiques pour le segment d'itinéraire (21-24) est affectée à chaque segment d'itinéraire et où au moins à partir d'un composant des données de classe (61) caractéristiques, une traînée de segment individuelle est transmise pour le segment d'itinéraire (21-24).

4. Procédé selon l'une des revendications 1 à 3, **caractérisé en ce que** la traînée de segment individuelle pour le segment d'itinéraire (11-15, 21-24, 31) est transmises à partir de données de classe (61) caractéristiques qui contiennent des valeurs actuelles en rapport avec le segment d'itinéraire (11-15, 21-24, 31).

5. Procédé selon l'une des revendications 1 à 4, **caractérisé en ce que** la traînée de segment individuelle pour le segment d'itinéraire (11-15, 21-24, 31) est transmise à partir de données de classe caractéristiques (61) qui contiennent des pronostics en rapport avec le segment d'itinéraire (11-15, 21-24, 31).

6. Procédé selon l'une des revendications 1 à 5, **caractérisé en ce que** la traînée de segment individuelle pour le segment d'itinéraire (11-15, 21-24, 31) est transmise à partir de données de classe caractéristiques (61) qui contiennent des attributs en rapport avec le segment d'itinéraire (11-15, 21-24, 31).

7. Procédé selon l'une des revendications 1 à 6, **caractérisé en ce que** la traînée de segment individuelle pour le segment d'itinéraire (11-15, 21-24, 31) est transmise à partir de données de classe caractéristiques (61) qui contiennent des valeurs dépendantes du temps et/ou variable dans le temps et/ou dépendantes du lieu et/ou variables selon le lieu en rapport avec le segment d'itinéraire (11-15, 21-24, 31).

8. Procédé selon l'une des revendications 1 à 7, **caractérisé en ce que** la traînée de segment individuelle pour le segment d'itinéraire (11-15, 21-24, 31) est transmise à partir de données de classe caractéristiques (61) qui contiennent des valeurs statistiques et/ou prévisibles en rapport avec le segment d'itinéraire (11-15, 21-24, 31).

9. Procédé selon l'une des revendications 1 à 8, **caractérisé en ce que** la traînée de segment individuelle pour le segment d'itinéraire (11-15, 21-24, 31) est transmise à partir de données de classe caractéristiques (61) qui contiennent des valeurs imprévisibles en rapport avec le segment d'itinéraire (11-15, 21-24, 31).

10. Procédé selon l'une des revendications 1 à 6, **caractérisé en ce que** la traînée de segment individuelle pour le segment d'itinéraire (11-15, 21-24, 31) est transmise à partir de données de classe caractéristiques (61) qui contiennent des valeurs prévisibles, statistiquement irrégulières en rapport avec le segment d'itinéraire (11-15, 21-24, 31).

11. Procédé selon l'une des revendications 1 à 10, **caractérisé en ce que** pour obtenir la traînée de segment individuelle, les données de classe caractéristiques (61) affectées au segment d'itinéraire (11-15, 21-24, 31) sont représentées sur un segment d'itinéraire correspondant (11-15,21-24,31).

12. Procédé selon l'une des revendications 1 à 11, **caractérisé en ce que** pour obtenir des données de navigation, la traînée de segment individuelle d'un segment d'itinéraire (11-15, 21-24, 31) transmise est représentée sur ce dernier.

13. Procédé selon l'une des revendications 1 à 12, **caractérisé en ce que** pour le segment d'itinéraire (11-15, 21-24, 31), des données de classe caractéristiques (61) sont générées à l'aide d'un procédé de saisie des données de trafic.

14. Procédé selon la revendication 13, **caractérisé en ce que** la traînée de segment individuelle pour le segment d'itinéraire (11-15, 21-24, 31) est transmise à partir de données de classe caractéristiques (61) qui contiennent des valeurs sur la situation générale du trafic en rapport au segment d'itinéraire (11-15, 21-24, 31).

15. Procédé selon l'une des revendications 1 à 12, **caractérisé en ce que** pour le segment d'itinéraire (11-15, 21-24, 31), des données de classe caractéristiques (61) sont générées à l'aide d'un système de transmission d'informations (70), en particulier un système de radiocommunication mobile.

16. Procédé selon la revendication 15, **caractérisé en ce que** le système de transmission d'informations (70) présente au moins un terminal mobile (71), **en ce qu'**un profil d'action du terminal mobile (71) est transmis et **en ce qu'**à partir du profil d'action du terminal mobile (71), des données de classe caractéristiques (61) pour un ou plusieurs segments d'itinéraire (11-15, 21-24, 31) sont générées.

17. Procédé selon l'une des revendications 1 à 16 à appliquer dans un système de navigation (50) présentant au moins un terminal mobile (51), affecté à un utilisateur du système de navigation (50), présentant au moins une unité centrale (52), sachant que l'unité centrale (52) communique du moins temporairement avec le terminal mobile (51) au moins au nombre de un, et où au moins un dispositif d'enregistrement est prévu dans lequel les données de classe (61) et éventuellement aussi les segments d'itinéraire (11-15, 21-24, 31) sont sauvegardés du moins temporairement, **caractérisé en ce que** pour générer et/ou modifier les données de navigation, au moins une possibilité d'itinéraire (10, 20, 30) et/ou un itinéraire déterminé est d'abord sous-divisé en un nombre de segments d'itinéraire (11-15, 21-24, 31), **en ce que** pour les segments d'itinéraire (11-15, 21-24, 31), des traînées de segment individuelles sont transmises à partir des données de classe caractéristiques (61) sauvegardées dans le dispositif d'enregistrement (60), sachant que les données de classe caractéristiques (61) et/ou la traînée de segment individuelle transmise est/sont représentée(s) sur le segment d'itinéraire (11-15, 21-24, 31) et **en ce que** chacune des traînées de segment est connectée, traînées de segment connectées à partir desquelles l'itinéraire peut être déterminé et/ou modifié.

18. Procédé selon la revendication 17, **caractérisé en ce que** la détermination et/ou la modification de l'itinéraire est entreprise dans le terminal (51) au moins au nombre de un.

19. Procédé selon la revendication 17 ou 18, **caractérisé en ce que** la détermination et/ou la modification de l'itinéraire est entreprise dans l'unité centrale (52) et ensuite transmise au terminal (51) au moins au nombre de un.

20. Produit de programme informatique avec un support de programme lisible par un ordinateur qui, lorsque le programme est chargé, présente des moyens servant à l'exécution du procédé selon l'une des revendications 1 à 19.

21. Système de navigation pour un indicateur d'itinéraire, avec un dispositif de détermination d'un itinéraire à partir d'au moins une possibilité d'itinéraire (10, 20, 30) et/ou de modification d'un itinéraire préalablement déterminé, sachant que le dispositif présente des moyens de sous-division de la possibilité d'itinéraire (10, 20, 30) étant au moins au nombre de une et/ou de l'itinéraire préalablement déterminé en un nombre de segments d'itinéraire (11-15, 21-24, 31), des moyens de générer une traînée de segment pour chaque segment d'itinéraire (11-15, 21-24, 31) de même que des moyens de connexion des traînées de segment et de détermination et/ou de modification de l'itinéraire en raison des traînées de segment connectées, **caractérisé en ce que** le dispositif présente des moyens de générer des données de classe caractéristiques (61) pour chaque segment d'itinéraire (11-15, 21-24, 31) et **en ce que** par ailleurs, des moyens de générer dynamiquement une traînée de segment individuelle pour chaque segment d'itinéraire (11-15, 21-24, 31) à partir d'au moins un composant des données de classe caractéristiques (61) sont prévus.

22. Système de navigation selon la revendication 21, **caractérisé par** des moyens d'exécution du procédé selon l'une des revendications 1 à 19.

23. Système de navigation selon la revendication 21 ou 22, **caractérisé en ce qu'**au moins un terminal (51) est prévu, lequel est affecté à un utilisateur du système de navigation (50).

24. Système de navigation selon la revendication 23, **caractérisé en ce que** le terminal (51) présente un dispositif de localisation personnelle.

25. Système de navigation selon l'une des revendications 21 à 24, **caractérisé en ce qu'**au moins une unité centrale (52) est prévue.

26. Système de navigation selon l'une des revendications 23 à 25, **caractérisé en ce que** le terminal (51) et/ou l'unité centrale (52) présente(nt) un bloc central et **en ce que** le bloc central présente des moyens d'exécution du procédé selon l'une des revendications 1 à 19.

27. Système de navigation selon l'une des revendications 21 à 26, **caractérisé en ce que** les moyens de générer les données de classe caractéristiques (61) sont conçus comme un dispositif de saisie de la situation du trafic.

28. Système de navigation selon l'une des revendications 21 à 26, **caractérisé en ce que** les moyens de générer les données de classe caractéristiques (61) sont conçus comme un système de transfert d'informations (70), en particulier un système de radiocommunication mobile.

29. Système de navigation selon l'une des revendications 21 à 28, **caractérisé en ce qu'**au moins un dispositif d'enregistrement (60) est prévu pour la sauvegarde du moins temporaire des segments d'itinéraire (11-15, 21-24, 31) et/ou des données de classe caractéristiques (61) et/ou des traînées de segment individuelles.
